# EUROPÄISCHE PATENTSCHRIFT

(11) **EP 1 896 307 B1**
(45) Veröffentlichungstag und Bekanntmachung des Hinweises auf die Patenterteilung: **29.02.2012**
(21) Anmeldenummer: 06818208.8
(22) Anmeldetag: 23.06.2006
(51) Int. Cl.: B60T 8/40, B60T 7/04, B60L 7/26

(54) **BREMSKRAFTERZEUGER FÜR EINE HYDRAULISCHE FAHRZEUGBREMSANLAGE**
BRAKE POWER GENERATOR FOR A HYDRAULIC VEHICLE BRAKING SYSTEM
GENERATEUR DE FORCE DE FREINAGE POUR SYSTEME DE FREINAGE HYDRAULIQUE DE VEHICULE

(30) Priorität: 29.06.2005 DE 102005030223
(43) Veröffentlichungstag der Anmeldung: 12.03.2008
(73) Patentinhaber: Lucas Automotive GmbH, 56070 Koblenz (DE)
(72) Erfinder: SCHLÜTER, Peter, 56206 Kammerforst (DE)
(74) Vertreter: Thum, Bernhard
(86) Internationale Anmeldenummer: PCT/EP2006/006076
(87) Internationale Veröffentlichungsnummer: WO 2007/025584

(56) Entgegenhaltungen:
- EP-A1- 0 260 169
- EP-A1- 1 634 787
- WO-A-2005/012057
- DE-A1- 1 780 063
- DE-A1- 19 750 977
- DE-A1- 19 845 052
- DE-U1-202004 009 835
- PATENT ABSTRACTS OF JAPAN Bd. 2000, Nr. 01, 31. Januar 2000 (2000-01-31) -& JP 11 285102 A (NABCO LTD), 15. Oktober 1999 (1999-10-15)

## Beschreibung

Die Erfindung betrifft einen Bremskrafterzeuger für eine hydraulische Fahrzeugbremsanlage und eine mit einem derartigen Bremskrafterzeuger ausgerüstete hydraulische Fahrzeugbremsanlage. Der erfindungsgemäße Bremskrafterzeuger ist ausgeführt mit einem Krafteingangsglied, das mit einem Bremspedal koppelbar oder gekoppelt und in einem Basisgehäuse des Bremskrafterzeugers verlagerbar ist, einem Hauptbremszylinder, in dem ein Primärkolben verlagerbar geführt ist, wobei der Primärkolben mit dem Hauptbremszylinder eine Primärdruckkammer zur Erzeugung eines hydraulischen Bremsdrucks begrenzt, einer mit dem Krafteingangsglied koppelbaren Pedalgegenkraft-Simulationseinrichtung und einer Betätigungskraft-Erzeugungseinrichtung zum Ausüben einer Betätigungskraft auf den Primärkolben.

Bei den heute üblichen Bremssystemen wird der zur Beaufschlagung der Radbremse am Fahrzeug notwendige hydraulische Bremsdruck überwiegend mittels eines Hauptbremszylinders erzeugt. Hierzu ist die Übertragung einer Betätigungskraft auf den Hauptbremszylinder notwendig, welche in Reaktion auf eine Betätigung des Bremspedals durch den Fahrzeugführer erzeugt wird. Zur Verbesserung des Betätigungskomforts wird überlicherweise die eigentliche Bremspedalbetätigungskraft mittels eines Bremskraftverstärkers um einen vorbestimmten Prozentsatz angehoben, so dass die notwendige Bremspedalbetätigungskraft für eine gewünschte Fahrzeugverzögerung derart klein gehalten werden kann, dass es jedem Fahrer ohne Anstrengung möglich ist, das Fahrzeug adäquat abzubremsen. Ein derartiges Bremssystem mit Bremskraftverstärker ist beispielsweise aus der DE 44 05 092 bekannt.

Zur Steigerung des Komforts für den Fahrer wurden in jüngster Vergangenheit Bremssysteme konzipiert, bei denen eine Bremspedalbetätigung von der eigentlichen Bremskrafterzeugung mechanisch entkoppelt ist. Vielmehr wird die Bremspedalbetätigung elektronisch erfasst und nach Maßgabe der erfassten Bremspedalbetätigung dann eine Bremskraft erzeugt. Derartige Lösungen sind beispielsweise aus dem Stand der Technik gemäß DE 198 45 052 A1 und DE 100 57 557 A1 bekannt. Bei diesem Stand der Technik wird die Bremspedalbetätigung elektronisch erfasst und nach Maßgabe der erfassten Bremspedalbetätigung ein elektromagnetischer Aktuator angesteuert, der für eine Bremskrafterzeugung bzw. Bremskraftverstärkung sorgt.

Ferner zeigt DE 198 17 190 C1 eine Bremsanlage, bei der mittels eines pneumatischen Bremskrafterzeugers an bestimmten Radbremseinheiten eine Bremskraft erzeugt wird. Dieser pneumatische Bremskrafterzeuger wird ebenfalls elektronisch nach Maßgabe einer erfassten Bremspedalbetätigung angesteuert.

Darüber hinaus zeigt der Stand der Technik gemäß EP 1 070 006 B1 eine Bremsanlage, bei der mittels eines Hydrauliksystems eine Bremskrafterzeugung erfolgt und die Pedalbetätigungskraft im Normalbetrieb bei der Bremskrafterzeugung ungenutzt bleibt.

Die vorstehend beschriebenen Lösungen aus dem Stand der Technik haben zwar den Vorteil einer von der Bremspedalbetätigung teilweise oder gar vollständig entkoppelten Bremskrafterzeugung, sie erfordern jedoch einen erheblichen gerätetechnischen und konstruktiven Aufwand. Insbesondere sind die mit elektronischen Aktuatoren ausgerüsteten Bremssysteme gemäß dem vorstehenden Stand der Technik kompliziert aufgebaut und daher kostenintensiv in der Herstellung. Ein weiterer Nachteil der vorstehend beschriebenen Systeme besteht darin, dass die darin verwendeten Pedalgegenkraft-Simulationseinrichtungen jeweils unmittelbar an einem mit dem Bremspedal gekoppelten Krafteingangsglied angeordnet sind, was zu verhältnismäßig groß bauenden Anordnungen führt.

Aus dem nachveröffentlichten Dokument DE 10 2004 012 260 B3 der Anmelderin oder dem Dokument DE 20 20014 009 835 U1 ist eine Anordnung bekannt, bei der das Steuerventil elektromagnetisch mittels eines zusätzlichen Aktuators und somit entkoppelt von einer Pedalbetätigung erfolgt.

Darüber hinaus ist aus dem Dokument DE 199 14 450 A1 ein Bremskrafterzeuger bekannt, bei dem eine Pedalgegenkraft-Simulationseinrichtung in dem sich an den Hauptbremszylinder anschließenden Hydraulik-Bremskreis vorgesehen ist. Diese Pedalgegenkraft-Simulationseinrichtung kann bedarfsweise zugeschaltet werden, so dass der vom Hauptbremszylinder herrührende Widerstand gegen eine Pedalbetätigung erhöht werden kann.

Als weiterer Stand der Technik, der im Wesentlichen technischen Hintergrund darstellt, ist auf die Dokumente DE 199 50 862 C5 und DE 601 05 353 T2 zu verweisen.

Das Dokument EP 1 634 787 A1 betrifft einen herkömmlichen Bremskraftverstärker mit hydraulisch angeschlossener Pedalgegenkraft-Simulationseinrichtung. Dabei wird eine über das Bremspedal vom Fahrer aufgebrachte Bremskraft in üblicher Weise pneumatisch verstärkt.

Es ist demgegenüber eine Aufgabe der vorliegenden Erfindung, einen Bremskrafterzeuger und ein damit ausgestattetes Bremssystem bereitzustellen, die bei gegenüber dem Stand der Technik vereinfachtem und damit kostengünstigerem Aufbau eine hinreichend gute Funktionsweise aufweisen.

Diese Aufgabe wird durch einen Bremskrafterzeuger mit den Merkmalen des Anspruchs 1 gelöst. Bei diesem ist vorgesehen, dass die Pedalgegenkraft-Simulationseinrichtung fluidisch mit dem Krafteingangsglied koppelbar oder gekoppelt ist und dass die Betätigungskraft-Erzeugungseinrichtung ein Steuerventil und eine Kammeranordnung aufweist, wobei die Kammeranordnung mit einer Unterdruckkammer und einer von der Unterdruckkammer durch eine bewegliche Wand getrennte und über das Steuerventil fluidisch miteinander verbindbare Arbeitskammer ausgebildet ist und wobei das Steuerventil mechanisch unmittelbar über die Pedalbetätigung zum Erzielen einer die Betätigungskraft bestimmenden Druckdifferenz zwischen der Arbeitskammer und der Unterdruckkammer ansteuerbar ist.

Die Erfindung sieht vor, dass komplizierte elektromagnetisch ansteuerbare Aktuatoren ersetzt werden und das Steuerventil mechanisch unmittelbar über die Pedalbetätigung betätigt wird. Die eigentliche Erzeugung einer auf den Hauptzylinder übertragenen Betätigungskraft erfolgt dann über die Kammeranordnung mit einer an der beweglichen Wand anliegenden Druckdifferenz entkoppelt von dem Bremspedal, so dass der Fahrer an sich mit seiner Bremspedalbetätigung zwar das Steuerventil öffnet und schließt, jedoch von der Betätigungskrafterzeugung entkoppelt ist. Dies bedeutet wiederum, dass abgesehen von der Kopplung zwischen Bremspedal und Steuerventil die Pedalbetätigungskraft für die Betätigungskrafterzeugung ungenutzt bleibt und in der Pedalgegenkraft-Simulationseinrichtung abgebaut wird. Die fluidische Kopplung von Pedalgegenkraft-Simulationseinrichtung ermöglicht eine räumlich beliebige Anordnung von dieser und beseitigt somit den Nachteil einer unmittelbaren räumlichen Zuordnung von Pedalgegenkraft-Simulationseinrichtung und Krafteingangsglied nahe dem Bremspedal. Dadurch lassen sich groß bauende Bremskrafterzeuger-Anordnungen vermeiden. Vielmehr kann die Pedalgegenkraft-Simulationseinrichtung an einem Ort angeordnet werden, an dem hinreichend Bauraum zur Verfügung steht.

Die Erfindung sieht ferner vor, dass das Steuerventil ein relativ zu dem Basisgehäuse verlagerbares Steuerventilgehäuse und ein relativ zu dem Steuerventilgehäuse verlagerbares Steuerventilelement aufweist, wobei an dem Steuerventilgehäuse ein in dichtende Anlage mit dem Steuerventilelement bringbarer Vakuumdichtsitz vorgesehen ist, wobei weiter mit dem Krafteingangsglied mechanisch eine Steuerventilhülse gekoppelt ist, an der ein in dichtende Anlage mit dem Steuerventilelement bringbarer Atmosphärendichtsitz vorgesehen ist. In diesem Zusammenhang kann ferner vorgesehen sein, dass bei dichtem Anliegen von Steuerventilelement und Atmosphärendichtsitz und gleichzeitig voneinander getrenntem Steuerventilelement und Vakuumdichtsitz die Arbeitskammer mit der Unterdruckkammer fluidisch verbunden ist und dass bei dichtem Anliegen von Steuerventilelement und Vakuumdichtsitz und bei gleichzeitig voneinander getrenntem Steuerventilelement und Atmosphärendichtsitz zum Aufbau eines Differenzdrucks zwischen der Arbeitskammer und der Unterdruckkammer die Arbeitskammer mit der Umgebungsatmosphäre fluidisch verbunden ist.

Um die vorstehende Entkopplung des Bremspedals von der eigentlichen Bremskrafterzeugung im Normalbetrieb des Bremskrafterzeugers erreichen zu können, sieht die Erfindung vor, dass das Steuerventilgehäuse und die Steuerventilhülse mechanisch voneinander entkoppelt sind und erst nach einer vorbestimmten Relativbewegung zueinander unter Überwindung eines Spiels in gegenseitige Anlage gelangen. Das Spiel ist derart bemessen, dass für den Fall, dass die Betätigungskraft-Erzeugungseinrichtung ausfällt, beispielsweise weil die Kammeranordnung nicht mehr ordnungsgemäß funktioniert oder eine Unterdruckversorgung der Unterdruckkammer ausgefallen ist, eine rein mechanische Bremsung durchgeführt werden kann. Nach Überwindung des Spiels kommen Steuerventilgehäuse und Steuerventilhülse in gegenseitige Anlage, so dass eine Weiterbewegung der Steuerventilhülse über das Bremspedal zu einer direkten mechanischen Bewegung des Steuerventilgehäuses und letztendlich zu einer rein mechanischen Betätigungskraft-Erzeugung führen. Das Spiel wird also in einer Notbetriebssituation überwunden, so dass eine rein mechanische Bremsung durchgeführt werden kann. Das Spiel ist allerdings nicht zu groß zu bemessen, um die in einer derartigen Notbetriebssituation zu überwindenden Leerwege nicht zu groß werden zu lassen.

Ferner kann in diesem Zusammenhang vorgesehen sein, dass das Steuerventilgehäuse und die Steuerventilhülse durch ein Federelement unter Vorspannung relativ zueinander bewegbar sind. Das Federelement ist hinreichend stark auszubilden, um im Normalbetrieb eine mechanische Kopplung von Steuerventilgehäuse und Steuerventilhülse zu verhindern.

Eine Weiterbildung der Erfindung sieht vor, dass die Unterdruckkammer zur Erzeugung eines Unterdrucks mit dem Ansaugtrakt eines Verbrennungsmotors oder mit einer Vakuumpumpe fluidisch verbunden ist.

Ferner kann vorgesehen sein, dass die Kammeranordnung als Tandem-Kammeranordnung mit einer ersten Kammeranordnung und einer von dieser getrennten zweiten Kammeranordnung ausgebildet ist, wobei die erste Kammeranordnung eine erste Unterdruckkammer und eine von dieser durch eine erste bewegliche Wand getrennte erste Arbeitskammer aufweist, wobei weiter die zweite Kammeranordnung eine zweite Unterdruckkammer und eine von dieser durch eine zweite bewegliche Wand getrennte zweite Arbeitskammer aufweist, wobei die erste und zweite Kammeranordnung über das Steuerventil mit Druck beaufschlagbar sind.

Wie vorstehend bereits geschildert, besteht ein wesentliches Merkmal der Erfindung darin, die Pedalgegenkraft-Simulationseinrichtung fluidisch mit dem Krafteingangsglied zu koppeln. Hierzu kann vorgesehen sein, dass das Krafteingangsglied über eine Übertragungskolbenanordnung mit der Pedaigegenkraft-Simulationseinrichtung gekoppelt ist. Eine Weiterbildung der Erfindung sieht vor, dass die Pedalgegenkraft-Simulationseinrichtung über ein Pedalgegenkraft-Hydrauliksystem mit einer Dämpferanordnung kraftübertragend koppelbar ist. In diesem Zusammenhang kann darüber hinaus vorgesehen sein, dass die Dämpferanordnung eine über einen durch das Pedaigegenkraft-Hydrauliksystem verlagerbaren Kraftkolben komprimierbare Simulationsfeder oder/und fluidische Dämpfungsmittel, vorzugsweise eine Drossel, oder/und eine gummielastische Anschlagscheibe aufweist.

Auch das Pedalgegenkraft-Hydrauliksystem ist in Abhängigkeit von den gegenwärtigen Betriebszuständen des Bremskrafterzeugers anzusteuern. Insbesondere ist bei einer Ausführungsvariante der Erfindung vorgesehen, dass die Pedalgegenkraft-Simulationseinrichtung nur dann aktiv werden kann, wenn der übrige Bremskrafterzeuger ordnungsgemäß funktioniert. Fällt nämlich die Betätigungskraft-Erzeugungseinrichtung aus, beispielsweise weil die Kammeranordnung oder die Unterdruckversorgung der Unterdruckkammer nicht mehr ordnungsgemäß funktionieren, so ist vorgesehen, dass die Pedalgegenkraft-Simulationseinrichtung keine zusätzlichen Pedalgegenkräfte mehr gegen eine Pedal betätigung aufbringt. Vielmehr soll in einem derartigen Notbetriebsfall die gesamte von einem Fahrer aufgebrachte Pedalbetätigungskraft auch tatsächlich zur rein mechanischen Betätigungskrafterzeugung genutzt werden. In diesem Fall ist also die Pedalgegenkraft-Simulationseinrichtung zu deaktivieren. Hierzu sieht eine Ausführungsform der Erfindung vor, dass das Pedalgegenkraft-Hydrauliksystem mit einem ansteuerbaren Trennventil ausgebildet ist, das in einer ersten Stellung, vorzugsweise in seiner Passivstellung, die Dämpferanordnung und die Übertragungskolbenanordnung hydraulisch voneinander entkoppelt und eine im Wesentlichen ungedämpfte Bewegung der Übertragungskolbenanordnung zulässt und das in einer zweiten Stellung, vorzugsweise seiner Aktivstellung, die Dämpferanordnung und die Übertragungskolbenanordnung hydraulisch miteinander koppelt. Ferner kann in diesem Zusammenhang vorgesehen sein, dass das Pedalgegenkraft-Hydrauliksystem mit einem Drosselelement versehen ist, welches in der Aktivstellung des Trennventils eine Hydraulikfluid-Strömung zu der Dämpferanordnung drosselt. Vorzugsweise ist vorgesehen, dass das Trennventil zu Beginn einer Bremspedalbetätigung aus seiner Passivstellung in seine Aktivstellung geschaltet wird und die Ansteuerung erst nach Beendigung der Bremspedalbetätigung aus seiner Aktivstellung in seine Passivstellung geschaltet wird. Dies bedeutet, dass das Trennventil selbsttätig in seine Passivstellung zurückkehrt und dann in einem Zustand ist, in dem die Pedalgegenkraft-Simulationseinrichtung einer rein mechanischen Betätigungskraft-Erzeugung nicht entgegenwirkt.

Eine Weiterbildung der Erfindung sieht vor, dass der Hauptbremszylinder in einem Zylindergehäuse, vorzugsweise als einseitig offene Zylinderbohrung, ausgebildet ist. Dabei kann vorgesehen sein, dass das Zylindergehäuse zusammen mit den darin angeordneten Komponenten als Baugruppe in das Basisgehäuse einschiebbar und mit diesem lösbar verbunden ist.

Zur Erhöhung der Sicherheit des erfindungsgemäßen Bremssystems sieht dieses zwei getrennte hydraulische Bremskreise vor. Um diese beiden Bremskreise fluidisch zu beschicken, ist der erfindungsgemäße Bremskrafterzeuger in einer weiteren Ausführungsform derart ausgebildet, dass in dem Hauptbremszylinder ein Sekundärkolben verlagerbar geführt ist, dass der Sekundärkolben mit dem Hauptbremszylinder eine Sekundärdruckkammer zur Erzeugung eines hydraulischen Bremsdrucks einschließt, und dass der Primärkolben mit dem Hauptbremszylinder und dem Sekundärkolben zur Erzeugung eines hydraulischen Bremsdrucks die Primärdruckkammer einschließt. Ferner kann in diesem Zusammenhang vorgesehen sein, dass der Primärkolben mit einer Durchgangsbohrung versehen ist, in der ein Betätigungskolben geführt ist, wobei der Betätigungskolben eine Betätigungszylinderbohrung aufweist, in der ein Übertragungskolben der Übertragungskolbenanordnung geführt und verlagerbar ist, wobei der Übertragungskolben in dem Betätigungskolben eine Hydraulikfluidkammer begrenzt, die fluidisch mit dem Hydrauliksystem der Pedalgegenkraft-Simulationseinrichtung gekoppelt ist. Vorteilhafterweise ist dabei der Betätigungskolben relativ zu dem Primärzylinder festgelegt.

Die Erfindung betrifft ferner eine Fahrzeugbremsanlage mit einem Bremskrafterzeuger der vorstehend beschriebenen Art.

Die Verwendung eines derartigen Bremskrafterzeugers bietet sich insbesondere auch bei modernen Fahrzeugen mit Hybridantrieb an. Derartige Fahrzeuge umfassen in herkömmlicher Weise einen Verbrennungsmotor sowie einen zusätzlichen Elektromotor oder eine andersartige Antriebsquelle, die bedarfsweise zugeschaltet werden. Ferner besitzen derartige Hybridfahrzeuge eine technische Ausrüstung, die es ermöglicht, kinetische Energie des Fahrzeugs, die bei dessen gewünschter Verzögerung abzubauen ist, umzuwandeln und zwischenzuspeichern, um sie zu Antriebszwecken bei einer Fortsetzung der Fahrt nutzen zu können. Beispielsweise wird ein in einem solchen Hybridfahrzeug vorgesehener Elektromotor während einer Verzögerung des Fahrzeugs als Generator genutzt und die dabei erzeugte elektrische Energie in einem Akkumulator zwischengespeichert. Diese durch die Generatorwirkung des Elektromotors erzeugte Verzögerung muss von der Bremsanlage berücksichtigt werden. Mit anderen Worten bedeutet dies, dass in einem Fall, in dem der Fahrer das Bremspedal betätigt, woraufhin der Elektromotor als Generator aktiviert wird, die eigentliche Bremsanlage des Fahrzeugs zunächst solange im Wesentlichen passiv gehalten werden muss, wie die von dem Fahrer über die Bremsbetätigung angeforderte Verzögerung die durch den als Generator wirkenden Elektromotor erzielbare Verzögerungswirkung nicht übersteigt. Gemäß einer Ausführungsvariante der erfindungsgemäßen Bremsanlage ist also vorgesehen, dass das Kraftfahrzeug mit einem zur Verzögerung genutzten Generator ausgebildet ist und dass die bei Aktivierung des Generators erzielte Fahrzeugverzögerung bei der Ansteuerung der Bremsanlage berücksichtigt wird.

Ausgehend von dieser Ausführungsvariante sieht die Bremsanlage ferner vor, dass sie einen mit dem Hauptbremszylinder kommunizierenden fluidischen Bremskreis aufweist, in dem wenigstens ein Fluidspeicher vorgesehen ist, wobei der wenigstens eine Fluidspeicher solange mit Hydraulikfluid aus dem fluidischen Bremskreis beschickbar ist, solange eine zum Abbremsen des Fahrzeugs momentan erforderliche Soll-Verzögerung die durch Aktivierung des Generators maximal erzielbare Fahrzeugverzögerung nicht übersteigt. Dies bedeutet, dass zwar aufgrund der unmittelbaren mechanischen Kopplung zwischen Bremspedal und Steuerventil eine Betätigungskraft von der Betätigungskraft-Erzeugungseinrichtung erzeugt wird, die dann letztendlich auch zu einer Verlagerung des Primärkolbens und ggf. des Sekundärkolbens in dem Hauptbremszylinder führt. Das in Reaktion darauf in die hydraulischen Bremskreise geförderte Hydraulikfluid führt jedoch nicht zu einem merklichen Druckaufbau und damit zu einer hydraulischen Ansteuerung einzelner Radbremseinheiten, sondern wird über den wenigstens einen Fluidspeicher "abgepuffert". Um dieses Abpuffern nur bedarfsweise, das heißt im Falle einer regenerativen Bremsung auszuführen, bei der der Generator aktiviert wird, sieht eine Weiterbildung der Erfindung vor, dass zwischen dem fluidischen Bremskreis und dem Fluidspeicher ein ansteuerbares Schaltventil vorgesehen ist, das in seiner ansteuerungsfreien Passivstellung den Fluidspeicher von dem fluidischen Bremskreis trennt und in seiner angesteuerten Aktivstellung, insbesondere in dem Zeitraum, solange die zum Abbremsen des Fahrzeugs momentan erforderliche Soll-Verzögerung die durch Aktivierung des Generators maximal erzielbare Fahrzeugverzögerung nicht übersteigt, den Fluidspeicher mit dem fluidischen Bremskreis verbindet.

Dies bedeutet aber auch, dass dann, wenn die über die Generatorwirkung erzielbare Fahrzeugverzögerung nicht mehr ausreicht, um der von dem Fahrer angeforderten Fahrzeugverzögerung zu entsprechen, die herkömmliche Bremsanlage des Fahrzeugs in einer die Bremswirkung des Generators berücksichtigenden Weise aktiviert werden muss. Hierfür gibt es grundsätzlich zwei Alternativen, nämlich
(i) eine additive Überlagerung der Bremswirkung von Generator und herkömmlicher Bremsanlage, wobei die Bremswirkung der herkömmlichen Bremsanlage um die Generatorbremswirkung reduziert wird, und
(ii) eine Abschaltung des Generators zu dem Zeitpunkt, zu dem die über die Generatorwirkung erzielbare Fahrzeugverzögerung nicht mehr ausreicht, um der von dem Fahrer angeforderten Fahrzeugverzögerung zu entsprechen, und ein gleichzeitiges entsprechend intensives Ansteuern der herkömmlichen Bremsanlage, um eine kontinuierliche sprungfreie (stetige) Bremsung durchzuführen.

Beide Alternativen sind einsetzbar.

Die Erfindung wird im Folgenden beispielhaft anhand der beiliegenden Figuren erläutert. Es stellen dar:
- Fig.1: eine Übersichtsdarstellung der erfindungsgemäßen Bremsanlage mit dem erfindungsgemäßen Bremskrafterzeuger und
- Fig.2: eine vergrößerte Darstellung des erfindungsgemäßen Bremskrafterzeugers.

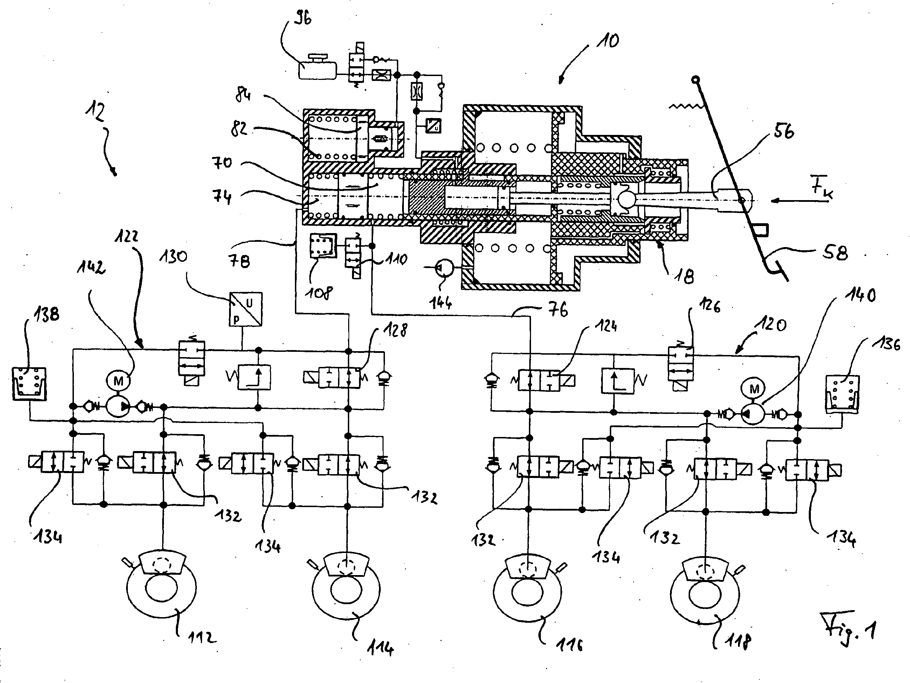

In Fig.1 ist ein Bremskrafterzeuger allgemein mit 10 bezeichnet, der in eine Bremsanlage 12 integriert ist. Bevor die Bremsanlage im Aufbau und in ihrer Funktionsweise erläutert wird, soll zunächst im Detail auf den Bremskrafterzeuger eingegangen werden.

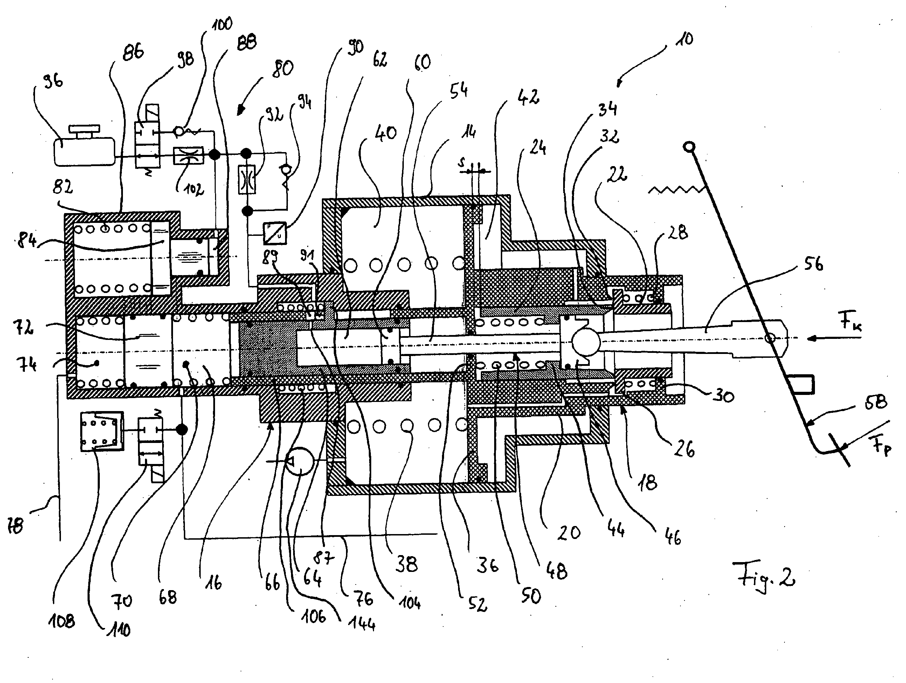

Der Bremskrafterzeuger umfasst ein Zylindergehäuse 14, das in Fig.2 auf der linken Seite einen Hauptbremszylinder 16 aufnimmt und in das ein Steuerventil 18 eingesetzt ist. Das Steuerventil 18 umfasst ein Steuerventilgehäuse 20, ein Steuerventilelement 22 und eine Ventilhülse 24. An dem Steuerventilelement 22 ist ein Flansch 26 ausgebildet, an dem eine Vorspannfeder 28 anliegt. Die Vorspannfeder 28 stützt sich anderenends an einem Kragen 30 ab, in dem dichtend das Steuerventilelement 22 verschiebbar geführt ist. An dem von der Vorspannfeder 28 abgewandten Ende des Flansches 26 bildet dieser zusammen mit zugewandten Abschnitten von Steuerventilgehäuse 20 und Ventilhülse 24 einen Vakuumdichtsitz 32 und einen Atmosphärendichtsitz 34, auf deren Funktionsweise und Bedeutung im Folgenden noch näher eingegangen wird.

An dem Steuerventilgehäuse 20 ist eine bewegliche Wand 36 festgelegt, die über eine Vorspannfeder 38 das Steuerventilgehäuse 20 in die in Fig.2 gezeigte Stellung vorspannt und nach einer Verlagerung für eine Rückstellbewegung sorgt. Die bewegliche Wand 36 ist abgedichtet in dem Zylindergehäuse 14 geführt und unterteilt das Zylindergehäuse 14 in eine Vakuum- bzw. Unterdruckkammer 40 und eine Arbeitskammer 42. Die Vakuumkammer 40 ist wie bei 144 angedeutet mit einer Unterdruckquelle oder mit einem Ansaugtrakt eines Verbrennungsmotors eines mit der Bremsanlage gemäß Fig. ausgerüsteten Kraftfahrzeugs verbunden, so dass sich in dieser ein gegenüber dem Atmosphärendruck reduzierter Unterdruck einstellt. Die Arbeitskammer 42 ist hingegen wahlweise mit der Vakuumkammer 40 oder mit der Umgebungsatmosphäre verbindbar, worauf im Folgenden noch näher eingegangen wird.

Auch die Ventilhülse 24 weist einen Kragen 44 auf. An dem Kragen 44 stützt sich einenends ein Kolbenabschnitt 46 eines Übertragungskolbens 48 ab. Auf der entgegengesetzten Seite des Kragens 44 stützt sich eine Vorspannfeder 50 ab, die mit ihrem anderen Ende an einem Führungskragen 52 anliegt, der einen Schaft 54 des Übertragungskolbens 48 dichtend führt. Der Kolbenabschnitt 46 nimmt an seinem von dem Schaft 54 wegweisenden Ende einen Kugelkopf eines Krafteingangsglieds 56 auf, das unmittelbar mechanisch mit einem Bremspedal 58 verbunden ist. Bei einer Betätigung des Bremspedals mit einer Pedalbetätigungskraft F_{P} wirkt auf das Krafteingangsglied eine Kraft F_{K}.

Wendet man sich wieder der Übertragungskolbenanordnung 48 zu, so erkennt man, dass diese an ihrem in Fg.2 linken Ende einen weiteren Kolbenabschnitt 60 aufweist, der dichtend in einer zylindrischen Sacklochbohrung 62 in einem Betätigungskolben 64 geführt ist. Der Betätigungskolben 64 ist in dem Primärkolben 66 dichtend und verschiebbar geführt, wobei der Primärkolben 66 in einer Zylinderbohrung 68 in dem Hauptbremszylinder 16 geführt ist. Der Betätigungskolben 64 und der Primärkolben 66 schließen einenends eine Primärkammer 70 in dem Hauptbremszylinder 16 ab, die an ihrem anderen Ende durch einen Sekundärkolben 72 abgeschlossen ist. Der Sekundärkolben 72 schließt mit dem Gehäuse des Hauptbremszylinders 16 eine Sekundärkammer 74 ein.

Die Primärkammer 70 ist über eine Hydraulikleitung 76 mit einem Primärbremskreis 120 des in Fig.1 dargestellten Bremssystems verbunden. Die Sekundärkammer 74 ist über eine Hydraulikleitung 78 mit einem Sekundärbremskreis 122 verbunden.

In Fig.2 erkennt man ferner eine Pedalgegenkraft-Simulationseinrichtung 80, die hydraulisch mit dem Krafteingangsglied 56 verbunden ist. Zentrales Element der Pedalgegenkraft-Simulationseinrichtung ist ein gegen eine Simulationsfeder 82 gespannter Kraftkolben 84, der in einem Simulationseinrichtungsgehäuse 86 eine Hydraulikkammer 88 einschließt und in diesem Simulationseinrichtungsgehäuse 88 gegen die Vorspannung der Simulationsfeder 82 verlagerbar ist.

Die Hydraulikkammer 88 ist über ein Hydrauliksystem mit der in der Sacklochbohrung 62 von dem Kolbenabschnitt 60 eingeschlossenen Hydraulikfluidkammer permanent fluidisch verbunden. Hierzu sind in dem Betätigungskolben 64 eine Schnüffelbohrung 87, sowie in dem Primärkolben 66 eine Verbindungsbohrung 89 und eine Verbindungsnut 91 vorgesehen. Die Kombination aus Verbindungsbohrung 89 und Verbindungsnut 91 in dem Primärkolben 66 sorgt auch dann für eine fluidische Verbindung zu dem Hydrauliksystem der Pedalgegenkraft-Simulationseinrichtung 80, wenn sich Primärkolben 66 und Betätigungsakolben 64 relativ zueinander bewegen. Das Fluidsystem der Pedalgegenkraft-Simulationseinrichtung 80 umfasst einen Drucksensor 90, eine Drossel 92 sowie ein Rückschlagventil 94. Ferner ist in dem Hydrauliksystem der Pedalgegenkraft-Simulationseinrichtung 80 ein Fluidreservoir 96 vorgesehen, das über ein elektromagnetisch ansteuerbares Trennventil 98 mit dem Hydrauliksystem koppelbar, sowie von diesem entkoppelbar ist. Auch hierfür sind ein Rückschlagventil 100 und eine Drossel 102 vorgesehen.

In Fig.2 erkennt man ferner, dass an dem Betätigungskolben 64 ein Verbindungszapfen 104 vorgesehen ist, mit dem eine mechanische Verbindung zwischen dem Betätigungskolben 64 und dem Primärkolben 66 gegeben ist. Ferner sorgt eine Rückstellfeder 106 für eine definierte Ruhestellung gemäß der Darstellung von Fig.2.

Ferner erkennt man in Fig.2, dass in der Hydraulikleitung 76 des Prirnärkreises eine Abzweigung zu einem Fluidspeicher 108 vorgesehen ist, wobei der Fluidspeicher 108 über ein elektromagnetisches Trennventil 110 mit dem Primärkreis 120 des Bremssystems verbindbar und von diesem fluidisch abtrennbar ist.

Bevor nun auf die Funktionsweise des erfindungsgemäßen Bremskrafterzeugers 10 eingegangen werden soll, wird im Folgenden der weitere Aufbau der erfindungsgemäßen Bremsanlage 12 anhand von Fig.1 beschrieben. Fg.1 zeigt vier Radbremseinheiten 112, 114, 116 und 118, wobei die Radbremseinheit 116 und 118 dem Primärkreis 120 zugeordnet und über die Hydraulikleitung 76 mit der Primärkammer 70 hydraulisch gekoppelt sind, und wobei die Radbremseinheiten 112 und 114 dem Sekundärkreis 122 zugeordnet sind, der über die Hydraulikleitung 78 mit der Sekundärkammer 74 hydraulisch gekoppelt ist. Primärkreis 120 und Sekundärkreis 122 sind in herkömmlicher Weise aufgebaut und umfassen zusätzlich noch zwei elektromagnetische Trennventile 124 und 126 bzw. 128 und 130.

Im Übrigen sind jeder Radbremseinheit 112, 114, 116 und 118 jeweils ein Zuführtrennventil 132 und ein Abführtrennventil 134 zugeordnet, wobei die Zuführtrennventile 132 in ihrer Passivstellung geöffnet sind und durch aktives Ansteuern geschlossen werden und wobei die Abführtrennventile 134 in ihrer Passivstellung geschlossen sind und durch aktives Ansteuern geöffnet werden. Bei geöffneten Zuführtrennventilen 132 lassen sich die Radbremseinheiten 112, 114, 116 und 118 fluidisch beschicken, um eine Bremswirkung zu erzielen. Durch Schließen der Zuführtrennventile 132 lassen sich die Radbremseinheiten 112, 114, 116 und 118 fluidisch isolieren, so dass keine Bremswirkung über diese erzielbar ist.

Darüber hinaus sind Druckspeicher 136 bzw. 138 sowie Druckquellen 140 und 142 vorgesehen, die die Bremsanlage 12 ABS- und ESP-fähig machen. Mit anderen Worten kann das erfindungsgemäße Bremssystem 12 auch ohne Betätigung des Bremspedals 58 über eine nicht gezeigte elektronische Steuereinheit in an sich bekannter Weise angesteuert werden.

Im Folgenden soll jedoch anhand von Fig.1 und 2 auf Betriebssituation eingegangen werden, in denen das Bremspedal 58 von einem Fahrer mit einer Pedalbetätigungskraft F_{P} beaufschlagt wird, so dass auf das Krafteingangsglied 56 eine Kraft F_{K} einwirkt. Hierbei sind drei Betriebsfälle zu unterscheiden:

### Betriebsfall 1: Normalbremsung

Bei einer herkömmlichen Bremsung, bei der das erfindungsgemäße Bremssystem 12 ordnungsgemäß funktioniert, wird bei einer Betätigung des Bremspedals 58 das Krafteingangsglied 56 in Fig.1 und 2 nach links verlagert. Aufgrund der Anlage des Kolbenabschnitts 46 an dem Kragen 44 wird die Ventilhülse 24 nach Maßgabe einer Verlagerung des Krafteingangsglieds 46 ebenfalls nach links verlagert. Dies führt dazu, dass der Atmosphärendichtsitz 34 aus der in Fig.2 gezeigten geschlossenen Stellung herausbewegt und geöffnet wird, so dass von der Umgebungsatmosphäre Luft in die Arbeitskammer 42 einströmen kann. Da sich in der Unterdruckkammer 40 jedoch ein gegenüber dem Atmosphärendruck reduzierter Unterdruck (Vakuum) befindet, kommt es an der beweglichen Wand 36 zu einer Druckdifferenz, so dass aufgrund der sich aufbauenden Druckdifferenz die bewegliche Wand 36 zusammen mit dem Steuerventilgehäuse und dem mit diesem gekoppelten Primärkolben 66 in Fig.1 und 2 nach links verlagert wird. In der Folge kommt es zu einem Druckaufbau in der Primärkammer 68 sowie in der Sekundärkammer 74, der in herkömmlicher Weise über geöffnete Trennventile 124 und 128 an die Radbremseinheiten 112, 114, 116 und 118 geleitet wird, um an diesen eine Bremsverzögerung zu erzielen. Der Druckaufbau an der beweglichen Wand 36 findet solange statt, bis Vakuumdichtsitz 32 und Atmosphärendichtsitz 34 beide an dem Flansch 26 des Ventilelements 22 dichtend anliegen. Sodann stellt sich ein konstanter Gleichgewichtzustand ein.

Es ist festzuhalten, dass die auf das Krafteingangsglied 46 einwirkende Kraft F_{K} - abgesehen von der Betätigung der Ventilhülse 24 - nicht unmittelbar zur Bremskrafterzeugung beiträgt. Vielmehr wird diese Kraft über die Übertragungskolbenanordnung 48 auf das zwischen dem Kolbenabschnitt 60 und dem Betätigungskolben 64 in der Sacklochbohrung 62 eingeschlossene Hydraulikfluid übertragen. Dieses wird unter Druck gesetzt und strömt über die links von dem Verbindungszapfen 104 vorgesehene Bohrung in die hydraulische Pedalgegenkraft-Simulationseinrichtung, wo sie die Drossel 92 durchströmt. In Reaktion auf eine elektronische Erfassung einer Pedalbetätigung wird das Trennventil 98 aus dem in Fig.2 gezeigten Zustand in seine jeweils andere Schaltstellung geschaltet, so dass keine Verbindung zu dem Fluidreservoir 96 besteht. Das aus der Sacklochbohrung 62 durch die Wirkung der Übertragungskotbenanordnung 48 herausgepresste Hydraulikfluid dringt somit in die Hydraulikkammer 88 ein und verschiebt gegen die Wirkung der Simulationsfeder 82 den Kraftkolben 84. Der Fahrer verspürt somit am Bremspedal unter Vermittlung der Übertragungskolbenanordnung 48 und des sich an diesen anschließenden Hydrauliksystems eine durch die Simulationsfeder 82 sowie das Drosselelement 92 hervorgerufene vertraute Pedalgegenkraft, obgleich die von ihm aufgebrachte Pedalkraft nicht zur Bremskrafterzeugung beiträgt.

Sobald der Fahrer die Pedalbetätigungskraft wieder reduziert, wird aufgrund der Wirkung der Vorspannfeder 50 die Ventilhülse 24 zurückgedrängt, wodurch auch das Ventilelement 22 mitgenommen wird. Dabei bleibt zwar der Atmosphärendichtsitz 34 weiterhin geschlossen, jedoch wird der Vakuumdichtsitz 32 geöffnet, so dass die Arbeitskammer 42 mit der Vakuumquelle 144 bzw. mit dem Ansaugtrakt des Fahrzeugs verbunden wird und sich die Druckdifferenz an der beweglichen Wand 36 wieder abbaut. In der Folge bewegt sich das Steuerventilgehäuse 20 in seine in Fig.2 gezeigte Ausgangsstellung zurück. Die Bremswirkung wird aufgehoben.

### Betriebsfall 2: Technischer Defekt

Bei einem technischen Defekt, bei dem die Kammeranordnung nicht mehr korrekt funktioniert, so dass sich auch keine hinreichende Druckdifferenz mehr an der beweglichen Wand 36 aufbauen lässt, geschieht Folgendes: Eine Bewegung der Ventilhülse 24 in Folge einer Pedalbetätigung bleibt entgegen dem vorstehend geschilderten Normalbremsfall zunächst wirkungslos. Dies bedeutet, dass die Ventilhülse 24 gegen den Widerstand der Vorspannfeder 50 relativ zu dem Steuerventilgehäuse 20 verlagert wird, wobei das Spiel s überwunden wird. Schließlich legt sich die Ventilhülse 24 mit ihrem in Fig. 2 linken Ende an den Kragen 52 des Steuerventilgehäuses 20 an und verschiebt dieses zusammen mit dem Primärkolben 66 unter der Wirkung der Kraft F_{K} nach links. Die Pedalgegenkraft-Simulationseinrichtung 80 bleibt in einem derartigen Zustand im Wesentlichen wirkungslos, da es aufgrund des geöffneten Ventils 98 zu einem Fluidstrom aus der Sacklochbohrung 62 in das Fluidreservoir 96 kommen kann. Die fluidische Verbindung zwischen der Sacklochbohrung 62 und dem Hydraulikkreis der Pedalgegenkraft-Simulationseinrichtung 80 bleibt über die Verbindungsbohrung 89 und die Verbindungsnut 91 permanent bestehen. In der Folge wird die weitere von einer Betätigung des Bremspedals 58 herrührende Bewegung unmittelbar mechanisch auf den Primärkolben 66 übertragen.

Somit kann die von dem Bremspedal ausgehende Betätigung unmittelbar mechanisch in eine Betätigungskraft und damit letztendlich in eine Bremswirkung umgewandelt werden.

### Betriebsfall 3: regeneratives Bremsen

Die erfindungsgemäße Bremsanlage ist insbesondere auch bei Hybridfahrzeugen einsetzbar, die beispielsweise zusätzlich zu einem Verbrennungsmotor auch noch mit einem Elektromotor (nicht näher gezeigt) ausgerüstet sind. Der Elektromotor kann auch als Generator genutzt werden, um aus der kinetischen Energie des entsprechend ausgerüsteten Fahrzeugs elektrische Energie zurückzugewinnen, die in einem Akkumulator zwischengespeichert und später zum Antreiben des Elektromotors wieder genutzt werden kann. Die während der Generatorwirkung des Elektromotors auftretende Fahrzeugverzögerung kann bei Hybridfahrzeugen auch zu Bremszwecken genutzt werden, wobei man in diesem Zusammenhang dann von einem "regenerativen Bremsen" spricht.

Beispielsweise kann vorgesehen sein, dass bei einer Betätigung des Bremspedals 58 zunächst solange der Elektromotor aufgrund seiner Generatorwirkung im Wesentlichen allein für eine Fahrzeugverzögerung sorgt, bis der durch die Intensität der Bremspedalbetätigung geäußerte Verzögerungswunsch des Fahrers das Verzögerungsvermögen des Generators übersteigt. In einem solchen Fall einer moderaten Verzögerung, die eine Aktivierung der Radbremseinheiten 112, 114, 116 und 118 nicht erfordert, d.h. in einem Zeitraum, solange die Verzögerungswirkung des Generators ausreicht, um dem Verzögerungswunsch des Fahrers zu entsprechen, sind Vorkehrungen zu treffen, um kein unerwünschtes Aktivieren der Radbremseinheiten 112, 114, 116 und 118 durchzuführen. Hierzu ist der Fluidspeicher 108 vorgesehen. Obgleich der Bremskrafterzeuger 10 in gleicher Weise funktioniert, wie vorstehend für den Normalbremsfall beschrieben, hat eine Verlagerung des Primärkolbens 66 keine unmittelbare Auswirkung auf eine Aktivierung der Radbremseinheiten 112, 114, 116 und 118. Bei einem derartigen regenerativen Bremsen werden nämlich die den Radbremseinheiten 112, 114, 116 und 118 zugeordneten Zuführtrennventile 132 in ihre geschlossene Stellung geschaltet, so dass keine Förderung von Bremsfluid zu den einzelnen Radbremseinheiten 112, 114, 116 und 118 erfolgt. Auch das Volumen der Sekundärkammer 74 bleibt im Wesentlichen unverändert. Die durch eine Verlagerung des Primärkolbens 66 hervorgerufene Reduzierung des Volumens der Primärkammer 70 wird durch Umschalten des Trennventils 110 in seine geöffnete Stellung und Beschicken des Fluidspeichers 108 ausgeglichen.

Der Fluidspeicher 108 ist hinsichtlich seines Aufnahmevermögens und seiner Steifigkeit an die übrige Fahrzeugbremsanlage angepasst. Der Fahrer verspürt aufgrund der aktiven Pedalgegenkraft-Simulationseinrichtung 80 in herkömmlicher Weise eine Pedalgegenkraft, obgleich das Bremssystem an sich bei der regenerativen Bremsung vollkommen wirkungslos bleibt und die Verzögerung allein durch die Generatorwirkung hervorgerufen wird.

Sobald aber der Verzögerungswunsch des Fahrers das Verzögerungsvermögen des als Generator wirkenden Elektromotors übersteigt, ist es erforderlich, zusätzliche Bremskraft über die Radbremseinheiten 112, 114, 116 und 118 aufzubauen. In der Folge werden die Zuführtrennventile 132 in ihre geöffnete Stellung geschaltet, so dass der in dem Fluidspeicher 108 anliegende Überdruck und jede weitere Bremspedalbetätigung in beschriebener Weise zu den Radbremseinheiten 112, 114, 116 und 118 übertragen werden kann. Gleichzeitig wird der Generator abgeschaltet. Aufgrund der Anpassung der Eigenschaften des Fluidspeichers 108 an das übrige Bremssystem kommt es bei Abschaltung des Generators zu einem im Wesentlichen kontinuierlichen, stetigen (sprungfreien) Übergang der Bremswirkung, d.h. der in dem Fluidspeicher 108 gespeicherte Bremsdruck führt zu einer der Bremswirkung des Generators im wesentlichen analogen Bremswirkung an den Radbremseinheiten 112, 114, 116 und 118. Nachdem der Überdruck aus dem Fluidspeicher 108 an den Radbremseinheiten 112, 114, 116 und 118 anliegt und diese entsprechende Bremswirkung zeigen, wird das Trennvenül 110 geschlossen. Die weitere Bremsung erfolgt in herkömmlicher Weise, d.h. durch weiteres Niederdrücken des Bremspedals und dadurch hervorgerufene weitere Druckerhöhung im Primärkreis 120 und Sekundärkreis 122. Sobald die Bremsung beendet wird und der Fahrer das Bremspedal wieder freigibt, wird das Trennventil 110 nochmals geöffnet, so dass sich der in dem Druckspeicher 108 verbliebene Restdruck vollständig abbauen kann. Das System befindet sich sodann wieder im bremswirkungslosen Ausgangszustand, wie in Fig. 1 und 2 gezeigt.

Erfindungsgemäß lässt sich ein verhältnismäßig einfach aufgebauter Bremskrafterzeuger komfortabel betätigen und insbesondere auch im Zusammenhang mit einem Hybridfahrzeug unter geringem technischem Aufwand einsetzen.

## Patentansprüche

1. Bremskrafterzeuger (10) für eine hydraulische Fahrzeugbremsanlage (12) mit
- einem Krafteingangsglied (56), das mit einem Bremspedal (58) koppelbar oder gekoppelt und in einem Basisgehäuse (14) des Bremskrafterzeugers (10) verlagerbar ist,
- einem Hauptbremszylinder (16), in dem ein Primärkolben (66) verlagerbar geführt ist, wobei der Primärkolben (66) mit dem Hauptbremszylinder (16) eine Primärdruckkammer (70) zur Erzeugung eines hydraulischen Bremsdrucks begrenzt,
- einer mit dem Krafteingangsglied (56) koppelbaren Pedalgegenkraft-Simulationseinrichtung (80) und
- einer Betätigungskraft-Erzeugungseinrichtung zum Ausüben einer Betätigungskraft auf den Primärkolben (66),
wobei die Pedaigegenkraft-Simulationseinrichtung (80) fluidisch mit dem Krafteingangsglied (56) koppelbar oder gekoppelt ist,
wobei die Betätigungskraft-Erzeugungseinrichtung ein Steuerventil (18) und eine Kammeranordnung aufweist,
wobei das Steuerventil (18) ein relativ zu dem Basisgehäuse (14) verlagerbares Steuerventilgehäuse (20) und ein relativ zu dem Steuerventilgehäuse (20) verlagerbares Steuerventilelement (22) aufweist, wobei an dem Steuerventilgehäuse (20) ein in dichtende Anlage mit dem Steuerventilelement (22) bringbarer Vakuumdichtsitz (32) vorgesehen ist, wobei weiter mit dem Krafteingangsglied (56) mechanisch eine Steuerventilhülse (24) gekoppelt ist, an der ein in dichtende Anlage mit dem Steuerventilelement (22) bringbarer Atmosphärendichtsitz (34) vorgesehen ist,
wobei die Kammeranordnung mit einer Unterdruckkammer (40) und einer von der Unterdruckkammer (40) durch eine bewegliche Wand (36) getrennte und über das Steuerventil (18) fluidisch verbindbare Arbeitskammer (42) ausgebildet ist und wobei das Steuerventil (18) mechanisch über die Pedalbetätigung zum Erzielen einer die Betätigungskraft bestimmenden Druckdifferenz zwischen der Arbeitskammer (42) und der Unterdruckkammer (40) ansteuerbar ist, und wobei das Steuerventilgehäuse (20) und die Steuerventilhülse (24) mechanisch voneinander entkoppelt sind und erst nach einer vorbestimmten Relativbewegung zueinander unter Überwindung eines Spiels(s) in gegenseitige Anlage gelangen.

2. Bremskrafterzeuger (10) nach Anspruch 1,
**dadurch gekennzeichnet, dass** bei dichtem Anliegen von Steuerventilelement (22) und Atmosphärendichtsitz (34) und gleichzeitig voneinander getrenntem Steuerventilelement (22) und Vakuumdichtsitz (32) die Arbeitskammer (42) mit der Unter-druckkammer (40) fluidisch verbunden ist und dass bei dichtem Anliegen von Steuerventilelement (22) und Vakuumdichtsitz (22) und bei gleichzeitig voneinander getrenntem Steuerventilelement (22) und Atmosphärendichtsitz (34) zum Aufbau eines Differenzdrucks zwischen der Arbeitskammer (42) und der Unterdruckkammer (40) die Arbeitskammer (42) mit der Umgebungsatmosphäre fluidisch verbunden ist.

3. Bremskrafterzeuger (10) nach einem der vorangehenden Ansprüche, **dadurch gekennzeichnet, dass** das Steuerventilgehäuse (20) und die Steuerventilhülse (44) durch ein Federelement (50) unter Vorspannung relativ zueinander bewegbar sind.

4. Bremskrafterzeuger (10) nach einem der vorangehenden Ansprüche, **dadurch gekennzeichnet, dass** die Unterdruckkammer (40) zur Erzeugung eines Unterdrucks mit dem Ansaugtrakt eines Verbrennungsmotors oder mit einer Vakuumpumpe (144) fluidisch verbunden ist.

5. Bremskrafterzeuger nach einem der vorangehenden Ansprüche,
**dadurch gekennzeichnet, dass** die Kammeranordnung als Tandem-Kammeranordnung mit einer ersten Kammeranordnung und einer von dieser getrennten zweiten Kammeranordnung ausgebildet ist, wobei die erste Kammeranordnung eine erste Unterdruckkammer und eine von dieser durch eine erste bewegliche Wand getrennte erste Arbeitskammer aufweist, wobei weiter die zweite Kammeranordnung eine zweite Unterdruckkammer und eine von dieser durch eine zweite bewegliche Wand getrennte zweite Arbeitskammer aufweist, wobei die erste und zweite Kammeranordnung über das Steuerventil mit Druck beaufschlagbar sind.

6. Bremskrafterzeuger (10) nach einem der vorangehenden Ansprüche, **dadurch gekennzeichnet, dass** das Krafteingangsglied (56) über eine Übertragungskolbenanordnung (48) mit der Pedalgegenkraft-Simulationseinrichtung (80) gekop-- pelt ist.

7. Bremskrafterzeuger (10) nach einem der vorangehenden Ansprüche, **dadurch gekennzeichnet, dass** die Pedalgegenkraft-Simulationseinrichtung (80) über ein das Pedalgegenkraft-Hydrauliksystem mit einer Dämpferanordnung kraftübertragend koppelbar ist.

8. Bremskrafterzeuger (10) nach Anspruch 7,
**dadurch gekennzeichnet, dass** die Dämpferanordnung eine über einen durch das Pedalgegenkraft-Hydrauliksystem verlagerbaren Kraftkolben (84) komprimierbare Simulationsfeder (82) oder/und fluidische Dämpfungsmittel, vorzugsweise eine Drossel (92), oder/und eine gummielastische Anschlagscheibe aufweist.

9. Bremskrafterzeuger (10) nach Anspruch 7 oder 8,
**dadurch gekennzeichnet, dass** das Pedalgegenkraft-Hydrauliksystem (80) mit einem ansteuerbaren Trennventil (98) ausgebildet ist, das in einer ersten Stellung, das heißt in seiner Passivstellung, die Dämpferanordnung und die Übertragungskolbenanordnung hydraulisch voneinander entkoppelt und eine im Wesentlichen ungedämpfte Bewegung der Übertragungskolbenanordnung (48) zulässt und das in einer zweiten Stellung, das heißt seiner Aktivstellung, die Dämpferanordnung und die Übertragungskolbenanordnung (48) hydraulisch miteinander koppelt.

10. Bremskrafterzeuger (10) nach Anspruch 9,
**dadurch gekennzeichnet, dass** das Pedalgegenkraft-Hydrauliksystem mit einem Drosselelement (92) versehen ist, welches in der Aktivstellung des Trennventils (98) eine Hydraulikfluid-Strömung zu der Dämpferanordnung drosselt.

11. Bremskrafterzeuger (10) nach Anspruch 9 oder 10,
**dadurch gekennzeichnet, dass** das Trennventil (98) zu Beginn einer Bremspedalbetätigung aus seiner Passivstellung in seine Aktivstellung geschaltet wird und die Ansteuerung erst nach Beendigung der Bremspedalbetätigung aus seiner Aktivstellung in seine Passivstellung geschaltet wird.

12. Bremskrafterzeuger (10) nach einem der vorangehenden Ansprüche,
**dadurch gekennzeichnet, dass** der Hauptbremszylinder in einem Zylindergehäuse (16), vorzugsweise als einseitig offene Zylinderbohrung (68), ausgebildet ist.

13. Bremskrafterzeuger (10) nach Anspruch 12,
**dadurch gekennzeichnet, dass** das Zylindergehäuse (16) zusammen mit den darin angeordneten Komponenten als Baugruppe in das Basisgehäuse (14) einschiebbar und mit diesem lösbar verbunden ist.

14. Bremskrafterzeuger (10) nach einem der vorangehenden Ansprüche,
**dadurch gekennzeichnet, dass** in dem Hauptbremszylinder (16) ein Sekundärkolben (72) verlagerbar geführt ist, dass der Sekundärkolben (72) mit dem Hauptbremszylinder (16) eine Sekundärdruckkammer (74) zur Erzeugung eines hydraulischen Bremsdrucks einschließt, und dass der Primärkolben (66) mit dem Hauptbremszylinder (16) und dem Sekundärkolben (72) zur Erzeugung eines hydraulischen Bremsdrucks die Primärdruckkammer (70) einschließt.

15. Bremskrafterzeuger (10) nach Anspruch 6 und einem der vorangehenden Ansprüche,
**dadurch gekennzeichnet, dass** der Primärkolben (66) mit einer Durchgangsbohrung versehen ist, in der ein Betätigungskolben (64) geführt ist, wobei der Betätigungskolben (64) eine Betätigungszylinderbohrung (62) aufweist, in der ein Übertragungskolben (60) der Übertragungskolbenanordnung (48) geführt und verlagerbar ist, wobei der Übertragungskolben (60) in dem Betätigungskolben (64) eine Hydraulikfluidkammer begrenzt, die fluidisch mit dem Hydrauliksystem der Pedalgegenkraft-Simulationseinrichtung (80) gekoppelt ist.

16. Bremskrafterzeuger (10) nach Anspruch 15,
**dadurch gekennzeichnet, dass** der Betätigungskolben (60) relativ zu dem Primärzylinder (66) festlegbar oder festgelegt ist.

17. Bremsanlage für ein Kraftfahrzeug mit einem Bremskrafterzeuger nach einem der vorangehenden Ansprüche.

18. Bremsanlage nach Anspruch 17,
**dadurch gekennzeichnet, dass** das Kraftfahrzeug mit einem zur Verzögerung genutzten Generator ausgebildet ist und dass die bei Aktivierung des Generators erzielte Fahrzeugverzögerung bei der Ansteuerung der Bremsanlage berücksichtigt wird.

19. Bremsanlage nach Anspruch 18,
**dadurch gekennzeichnet, dass** die Bremsanlage einen mit dem Hauptbremszylinder kommunizierenden fluidischen Bremskreis aufweist, in dem wenigstens ein Fluidspeicher (108) vorgesehen ist, wobei der wenigstens eine Fluidspeicher (108) solange mit Hydraulikfluid aus dem fluidischen Bremskreis beschickbar ist, solange eine zum Abbremsen des Fahrzeugs momentan erforderliche Soll-Verzögerung die durch Aktivierung des Generators maximal erzielbare Fahrzeugverzögerung nicht übersteigt.

20. Bremsanlage nach Anspruch 19,
**dadurch gekennzeichnet, dass** zwischen dem fluidischen Bremskreis und dem Fluidspeicher (108) ein ansteuerbares Schaltventil (110) vorgesehen ist, das in seiner ansteuerungsfreien Passivstellung den Fluidspeicher (108) von dem fluidischen Bremskreis trennt und in seiner angesteuerten Aktivstellung, insbesondere in dem Zeitraum, solange die zum Abbremsen des Fahrzeugs momentan erforderliche Soll-Verzögerung die durch Aktivierung des Generators maximal erzielbare Fahrzeugverzögerung nicht übersteigt, den Fluidspeicher (108) mit dem fluidischen Bremskreis verbindet.

## Claims

1. A brake force generator (10) for a hydraulic vehicle braking system (12) having:
a force input element which can be coupled or is coupled with a brake pedal (58) and is displaceable in a base housing (14) of the brake force generator (10),
a master brake cylinder (16) in which a primary piston (66) is guided displaceably, wherein the primary piston (66) with the master brake cylinder (16) delimits a primary pressure chamber (70) to generate a hydraulic brake pressure,
a pedal counter-force simulation device (80) which can be coupled with the force input element (56), and
an actuation force generating device to exert an actuation force on the primary piston (66),
wherein the pedal counter-force simulation device (80) can be coupled or is coupled fluidically with the force input element (56) and wherein the actuation force generating device has a control valve (18) and a chamber arrangement,
wherein the control valve (18) has a control valve housing (20) which is displaceable relative to the base housing (14) and a control valve element (22) which is displaceable relative to the control valve housing (20),
wherein on the control valve housing (20) is provided a vacuum-tight seat (32) which can be brought into sealing contact with the control valve element (22), wherein
furthermore mechanically coupled with the force input element (56) is a control valve sleeve (24) on which is provided an atmosphere-tight seat (34) which can be brought into sealing contact with the control valve element (22),
wherein the chamber arrangement is formed with a vacuum chamber (40) and a working chamber (42) which is separated from the vacuum chamber (40) via a moveable wall (36) and can be connected fluidically thereto via the control valve (18), and wherein the control valve (18) is mechanically controllable via the pedal actuation to achieve a pressure difference between the working chamber (42) and the vacuum chamber (40) which determines the actuation force, and
wherein the control valve housing (20) and control valve sleeve (24) are mechanically decoupled from each other and only come into mutual contact after a predetermined relative movement to each other, after overcoming a play.

2. The brake force generator (10) according to claim 1, **characterised in that** on sealed contact of the control valve element (22) and atmosphere-tight seat (34) and simultaneous separation of the control valve element (22) and vacuum seal seat (32), the working chamber (42) is fluidically connected with the vacuum chamber (40), and that on sealed contact of the control valve element (22) and vacuum-tight seat (22) and simultaneous separation of the control valve element (22) and atmosphere-tight seat (34), to build up a pressure difference between the working chamber (42) and the vacuum chamber (40), the working chamber (42) is fluidically connected with the ambient atmosphere.

3. The brake force generator (10) according to one of the preceding claims, **characterised in that** the control valve housing (20) and control valve sleeve (44) can be moved relative to each other under pretension by a spring element (50).

4. The brake force generator (10) according to one of the preceding claims, **characterised in that** the vacuum pressure chamber (40), to generate a vacuum, is fluidically connected with the intake tract of a combustion engine and a vacuum pump (144).

5. The brake force generator according to one of the preceding claims, **characterised in that** wherein the chamber arrangement is formed as a tandem chamber arrangement with a first chamber arrangement and a second chamber arrangement separate therefrom, the first chamber arrangement having a first vacuum chamber and a first working chamber separated therefrom by a first moveable wall, furthermore the second chamber arrangement having a second vacuum chamber and a second working chamber separated therefrom by a second moveable wall, wherein the first and second chamber arrangements are selectively pressurised via the control valve.

6. The brake force generator (10) according to one of the preceding claims, **characterised in that** the force input element (56) is coupled via a transfer piston arrangement (48) with the pedal counter-force simulation device (80).

7. The brake force generator (10) according to one of the preceding claims, **characterised in that** the pedal counter-force simulation device (80) can be coupled with a damper arrangement via the pedal force counter hydraulic system in a force-transmitting manner.

8. The brake force generator (10) according to claim 7, **characterised in that** the damper arrangement has at least one of a simulation spring (82) that can be compressed by the force piston (84) displaceable via the pedal counter-force hydraulic system, a fluidic damping means, preferably a choke (92), and a resilient stop plate.

9. The brake force generator (10) according to claim 7 or 8, **characterised in that** the pedal counter-force hydraulic system (80) is formed with a controllable shut-off valve (98) which in a first position, that is in its passive position, allows the damper arrangement and transfer piston arrangement to be hydraulically decoupled from each other and an essentially undamped movement of the transfer piston arrangement (48), and which in a second position, that is in its active position, couples the damper arrangement and the transfer piston arrangement (48) hydraulically together.

10. The brake force generator (10) according to claim 9, **characterised in that** the pedal counter-force hydraulic system comprises a choke element (92) which in the active position of the shut-off valve (98) chokes a hydraulic fluid flow to the damper arrangement.

11. The brake force generator (10) according to claim 9 or 10, **characterised in that** at the start of a brake pedal actuation, the shut-off valve (98) is switched from its passive position to its active position and the control is only switched from its active position to its passive position after the end of the brake pedal actuation.

12. The brake force generator (10) according to one of the preceding claims, **characterised in that** master brake cylinder is formed in a cylinder housing (16), preferably as a cylinder bore (68) open on one side.

13. The brake force generator according to claim 12, **characterised in that** the cylinder housing (16) with the components arranged therein can be inserted as an assembly in the base housing (14) and is detachably connected therewith.

14. The brake force generator (10) according to one of the preceding claims, **characterised in that** in the master brake cylinder (16) is displaceably guided a secondary piston (72), that the secondary piston (72) with the master brake cylinder (16) encloses a secondary pressure chamber (74) to generate a hydraulic brake pressure, and that the primary piston (66) with the master brake cylinder (16) and secondary piston (72), to generate a hydraulic braking pressure, encloses the primary pressure chamber (70).

15. The brake force generator (10) according to claim 6 and one of the preceding claims, **characterised in that** primary piston (66) comprises a through bore in which is guided an actuating piston (64), wherein the actuating piston (64) has an actuating cylinder bore (62) in which a transfer piston (60) of the transfer piston arrangement (48) is guided and displaceable, wherein the transfer piston (60) in the actuating piston (64) delimits a hydraulic fluid chamber which is fluidically connected with the hydraulic system of the pedal counter-force simulation device (80).

16. The brake force generator (10) according to claim 15, **characterised in that** the actuation piston (60) can be fixed or is fixed relative to the primary cylinder (66).

17. A braking system for a motor vehicle with a brake force generator according to one of the preceding claims.

18. The braking system according to claim 17, **characterised in that** the motor vehicle is formed with a generator used for deceleration and that the vehicle deceleration achieved on activation of the generator is taken into account in the control of the braking system.

19. The braking system according to claim 18, **characterised in that** the braking system has a fluidic brake circuit which communicates with the master brake cylinder and in which is provided at least one fluid accumulator (108), wherein the at least one fluid accumulator (108) can be supplied with hydraulic fluid from the fluidic brake circuit as long as a nominal deceleration momentarily required to brake the vehicle does not exceed the maximum vehicle deceleration achievable by activation of the generator.

20. The braking system according to claim 19, **characterised in that** between the fluidic brake circuit and the fluid accumulator (108) is provided a controllable changeover valve (110), which in its uncontrolled passive position separates the fluid accumulator (108) from the fluidic brake circuit and in its controlled active position, in particular in the period while the nominal deceleration momentarily necessary to brake the vehicle does not exceed the maximum vehicle deceleration achievable by activation of the generator, connects the fluid accumulator (108) with the fluidic brake circuit.

## Revendications

1. Générateur de force de freinage (10) pour un système de freinage hydraulique de véhicule (12), comprenant
- un organe d'entrée de force (56) qui peut être accouplé ou est accouplé à une pédale de frein (58) et peut se déplacer dans un boîtier de base (14) du générateur de force de freinage (10),
- un maître-cylindre de frein (16), dans lequel un piston primaire (66) est guidé déplaçable, ledit piston primaire (66) délimitant avec le maître-cylindre de frein (16) une chambre de pression primaire (70) servant à produire une pression de freinage hydraulique,
- un dispositif de simulation de force antagoniste de pédale (80) qui peut être accouplé à l'organe d'entrée de force (56)
- un dispositif de production de force d'actionnement servant à exercer une force d'actionnement sur le piston primaire (66),
ledit dispositif de simulation de force antagoniste de pédale (80) pouvant être ou étant relié fluidiquement à l'organe d'entrée de force (56),
ledit dispositif de production de force d'actionnement présentant une soupape de commande (18) et un ensemble de chambres,
ladite soupape de commande (18) présentant un boîtier de soupape de commande (20) pouvant se déplacer par rapport au boîtier de base (14) et un organe de soupape de commande (22) pouvant se déplacer par rapport au boîtier de soupape de commande (20), un siège d'étanchéité en dépression (32) qui peut être amené en contact étanche avec l'organe de soupape de commande (22) étant prévu sur le boîtier de soupape de commande (20), une douille de soupape de commande (24) étant de plus accouplée à l'organe d'entrée de force (56), sur laquelle douille est prévu un siège d'étanchéité atmosphérique (34) qui peut être amené en contact étanche avec l'organe de soupape de commande (22),
ledit ensemble de chambres étant composé d'une chambre de dépression (40) et d'une chambre de travail (42) séparée par une paroi mobile (36) de la chambre de dépression (40) et pouvant être reliée fluidiquement à cette dernière par l'intermédiaire de la soupape de commande (18), et la soupape de commande (18) pouvant être commandée mécaniquement par l'actionnement de la pédale pour obtenir une différence de pression entre la chambre de travail (42) et la chambre de dépression (40), laquelle différence détermine la force d'actionnement, et ledit boîtier de soupape de commande (20) et ladite douille de soupape de commande (24) étant mécaniquement désaccouplés et amenés en contact réciproque seulement après avoir effectué un mouvement relatif prédéterminé l'un vers l'autre en surmontant un jeu (s).

2. Générateur de force de freinage (10) selon la revendication 1,
**caractérisé en ce que** la chambre de travail (42) est reliée fluidiquement à la chambre de dépression (40) lorsque l'organe de soupape de commande (22) et le siège d'étanchéité atmosphérique (34) sont en contact étanche et lorsque l'organe de soupape de commande (22) et le siège d'étanchéité en dépression (32) sont simultanément séparés l'un de l'autre, et **en ce que** la chambre de travail (42) est reliée fluidiquement à l'atmosphère environnante lorsque l'organe de soupape de commande (22) et le siège d'étanchéité en dépression (32) sont en contact étanche et lorsque l'organe de soupape de commande (22) et le siège d'étanchéité atmosphérique sont simultanément séparés l'un de l'autre pour produire une différence de pression entre la chambre de travail (42) et la chambre de dépression (40).

3. Générateur de force de freinage (10) selon l'une des revendications précédentes,
**caractérisé en ce que** le boîtier de soupape de commande (20) et la douille de soupape de commande (24) peuvent se déplacer l'un par rapport à l'autre par le biais d'un organe formant ressort (50) sous précontrainte.

4. Générateur de force de freinage (10) selon l'une des revendications précédentes,
**caractérisé en ce que** la chambre de dépression (40) est reliée fluidiquement à la section d'aspiration d'un moteur à combustion ou à une pompe à vide (144) pour produire une dépression.

5. Générateur de force de freinage selon l'une des revendications précédentes,
**caractérisé en ce que** l'ensemble des chambres est réalisé sous forme d'un ensemble de chambres tandem comprenant un premier ensemble de chambres et un deuxième ensemble de chambres séparé de ce dernier, le premier ensemble de chambres présentant une première chambre de dépression et une première chambre de travail séparée de cette dernière par une première paroi mobile, le deuxième ensemble de chambres présentant en outre une deuxième chambre de dépression et une deuxième chambre de travail séparée de cette dernière par une deuxième paroi mobile, le premier et le second ensemble de chambres pouvant être mis sous pression par le biais de la soupape de commande.

6. Générateur de force de freinage (10) selon l'une des revendications précédentes,
**caractérisé en ce que** l'organe d'entrée de force (56) est accouplé au dispositif de simulation de force antagoniste de pédale (80) par l'intermédiaire d'un ensemble de pistons de transmission (48).

7. Générateur de force de freinage (10) selon l'une des revendications précédentes,
**caractérisé en ce que** le dispositif de simulation de force antagoniste de pédale (80) peut être accouplé en transmission de force à un ensemble d'amortisseurs par l'intermédiaire du système hydraulique de force antagoniste de pédale.

8. Générateur de force de freinage (10) selon la revendication 7,
**caractérisé en ce que** l'ensemble d'amortisseurs présente un ressort de simulation (82) compressible par le biais d'un piston de force (84) pouvant être déplacé par le système hydraulique de force antagoniste de pédale ou/et des moyens d'amortissement fluidiques, de préférence un étranglement (92) ou/et une rondelle de butée en caoutchouc élastique.

9. Générateur de force de freinage (10) selon la revendication 7 ou 8,
**caractérisé en ce que** le système hydraulique de force antagoniste de pédale (80) est pourvu d'une soupape de séparation (98) qui peut être commandée et qui, dans une première position, c'est-à-dire dans sa position passive, désaccouple hydrauliquement l'un de l'autre l'ensemble d'amortisseurs et l'ensemble de pistons de transmission et autorise un mouvement pour l'essentiel non amorti de l'ensemble de pistons de transmission (48) et qui, dans une seconde position, c'est-à-dire dans sa position active, accouple hydrauliquement l'un à l'autre l'ensemble d'amortisseurs et l'ensemble de pistons de transmission (48).

10. Générateur de force de freinage (10) selon la revendication 9,
**caractérisé en ce que** le système hydraulique de force antagoniste de pédale est pourvu d'un organe d'étranglement (92), lequel, dans la position active de la soupape de séparation (98), réduit un courant de fluide hydraulique vers l'ensemble d'amortisseurs.

11. Générateur de force de freinage (10) selon la revendication 9 ou 10,
**caractérisé en ce qu'**au début d'un actionnement de la pédale de frein, la soupape de séparation (98) passe de sa position passive à sa position active, et la commande passe de sa position active à sa position passive seulement après achèvement de l'actionnement de la pédale de frein.

12. Générateur de force de freinage (10) selon l'une des revendications précédentes,
**caractérisé en ce que** le maître-cylindre de frein est réalisé dans un boîtier de cylindre (16), de préférence en tant qu'alésage de cylindre (68) ouvert sur un côté.

13. Générateur de force de freinage (10) selon la revendication 12,
**caractérisé en ce que** le boîtier de cylindre (16) peut, conjointement avec les composants disposés à l'intérieur dudit boîtier, être introduit en tant que module dans le boîtier de base (14) et relié de manière amovible à celui-ci.

14. Générateur de force de freinage (10) selon l'une des revendications précédentes,
**caractérisé en ce qu'**un piston secondaire (72) est guidé déplaçable dans le maître-cylindre de frein (16), que le piston secondaire (72) avec le maître-cylindre de frein (16) englobe une chambre de pression secondaire (74) servant à produire une pression de freinage hydraulique, et que le piston primaire (66) avec le maître-cylindre de frein (16) et le piston secondaire (72) englobe la chambre de pression primaire (70) servant à produire une pression de freinage hydraulique.

15. Générateur de force de freinage (10) selon la revendication 6 et l'une des revendications précédentes,
**caractérisé en ce que** le piston primaire (66) est pourvu d'un alésage traversant dans lequel est guidé un piston d'actionnement (64), ledit piston d'actionnement (64) présentant un alésage de cylindre d'actionnement (62) dans lequel un piston de transmission (60) de l'ensemble de pistons de transmission (48) est guidé et peut être déplacé, ledit piston de transmission (60) dans le piston d'actionnement (64) délimitant une chambre de fluide hydraulique qui est accouplée fluidiquement au système hydraulique du dispositif de simulation de force antagoniste de pédale (80).

16. Générateur de force de freinage (10) selon la revendication 15,
**caractérisé en ce que** le piston d'actionnement (60) peut être déterminé ou est déterminé par rapport au cylindre primaire (66).

17. Système de freinage pour véhicule à moteur pourvu d'un générateur de force de freinage selon l'une des revendications précédentes.

18. Système de freinage selon la revendication 17,
**caractérisé en ce que** le véhicule à moteur est équipé d'un générateur utilisé pour le ralentissement et que le ralentissement du véhicule obtenu à l'activation du générateur est pris en compte lors de la commande du système de freinage.

19. Système de freinage selon la revendication 18,
**caractérisé en ce que** le système de freinage présente un circuit fluidique de freinage communiquant avec le maître-cylindre de frein, dans lequel circuit est prévu au moins un réservoir de fluide (108), ledit réservoir de fluide (108) pouvant être alimenté en fluide hydraulique depuis le circuit fluidique de freinage tant qu'une décélération théorique momentanément nécessaire pour ralentir le véhicule ne dépasse pas la décélération maximale pouvant être atteinte à l'activation du générateur.

20. Générateur de force de freinage (10) selon la revendication 19,
**caractérisé en ce qu'**il est prévu entre le circuit fluidique de freinage et le réservoir de fluide (108) une valve de commande (110) qui peut être commandée et qui, dans sa position passive sans commande, sépare le réservoir de fluide (108) du circuit fluidique de freinage et qui, dans sa positive active de commande, en particulier tant que la décélération théorique momentanément nécessaire pour ralentir le véhicule ne dépasse pas la décélération maximale pouvant être atteinte à l'activation du générateur, relie le réservoir de fluide (108) au circuit fluidique de freinage.
